# EUROPÄISCHE PATENTSCHRIFT

(11) **EP 1 709 497 B1**
(45) Veröffentlichungstag und Bekanntmachung des Hinweises auf die Patenterteilung: **23.10.2013**
(21) Anmeldenummer: 04804170.1
(22) Anmeldetag: 22.12.2004
(51) Int. Cl.: G05B 19/042, G05B 19/418

(54) **VORRICHTUNG ZUR ÜBERTRAGUNG VON FELDGERÄTEDATEN MITTELS EINER FUNKVERBINDUNG**
DEVICE FOR THE TRANSMISSION OF FIELD DEVICE DATA BY MEANS OF A RADIO LINK
DISPOSITIF POUR TRANSMETTRE DES DONNEES D'APPAREILS DE CHAMP AU MOYEN D'UNE LIAISON RADIO

(30) Priorität: 16.01.2004 DE 102004002330
(43) Veröffentlichungstag der Anmeldung: 11.10.2006
(73) Patentinhaber: ABB AG, 68309 Mannheim (DE)
(72) Erfinder: SCHEINHARDT, Falk, 69469 Weinheim (DE); ZANK, Gunnar, 06179 Teutschenthal (DE); MERKEL, Hans Peter, 69198 Schriesheim (DE)
(86) Internationale Anmeldenummer: PCT/EP2004/014574
(87) Internationale Veröffentlichungsnummer: WO 2005/069091

(56) Entgegenhaltungen:
- EP-A- 1 045 302
- EP-A- 1 293 853
- DE-A1- 10 151 119
- US-A1- 2003 043 052

## Beschreibung

Die Erfindung betrifft ein System zur Datenübertragung in Schaltanlagen, insbesondere in Niederspannungsschaltanlagen, gemäß, dem Oberbegriff des Anspruchs 1.

Feldgeräte in Schaltanlagen, die auch als Feldgeräte bezeichnet werden und die zur Steuerung und Oberwachung von Betriebsmitteln dienen, übertragen Daten zu einer oder mehreren Datenverarbeitungseinrichtungen, auf welchen beispielsweise eine Visualisierung der übertragenen Daten durchgeführt wird. Ais Obertragungsmedium werden dabei drahtgebundene Bussysteme, wie beispielsweise Profibus, eingesetzt. An ein solches Bussystem sind alle Feldgeräte und Datenverarbeitungseinrichtungen, gegebenenfalls über Buskoppler, angeschlossen.

Aus der US2003/043052 A1 ist eine Vorrichtung für den redundanten drahtlosen Zugang zu Feldgeräten in einem verteilten Feldbus-Steuerungssystem bekannt, wobei unterschiedliche drahtlose Übertragungswege zur Redundanz vorgesehen sind.

In der EP1293853 A ist ein Funkmodul für Feldgeräte offenbart, das aus einer Sende-/Empfangseinheit für Funksignale einer Kommunikationseinheit und einer zwischengeschalteten Umsetzereinheit besteht, welche die Funksignale in Feldgerätesignale beziehungsweise Feldgerätesignale in Funksignale umwandelt. Weitere Einzelheiten sind diesem Dokument nicht entnehmbar.

Bei der Installation der Schaltanlage, beziehungsweise des Bussystems, sind Anschlussmöglichkeiten für jede Datenverarbeitungseinrichtung vorzusehen, wodurch der Standort der jeweiligen Datenverarbeitungseinrichtung festgelegt ist. Eine Änderung oder Erweiterung, beispielsweise durch Hinzufugen einer weiteren Datenverarbeitungseinrichtung, verursacht einen Planungs- und Verdrahtungsaufwand, da eine weitere Anschlussm6glichkeit an das vorhandene Bussystem geschaffen werden muss.

Aus der Druckschrift DE 10151119 A1 ist ein System zur Datenübertragung in einer Schaltanlage bekannt. Dabei werden Daten von mehreren Feldgeräten über einen Sternkoppler und ein Telefonnetz zu einem entfernt befindlichen Firmen-Intranet übertragen, an welches mehrere Datenverarbeitungseinrichtungen angeschlossen sind. Ein derartiges System bedingt jedoch einen vergleichsweise hohen Verschaltungsaufwand zur Anbindung der Datenverarbeitungseinrichtungen.

Aus der Druckschrift EP 1045302 A ist eine industrielle Einrichtung zur drahtlosen Fem-Überwachung, -Steuerung oder -Konfigurierung von Feldgeräten mittels eines Funktelefons bekannt, welches über ein Drahtlos-Telefon-System und mittels einer Benutzer-Schnittstelle mit der vorgenannten Einrichtung kommuniziert.

Dabei ist das Funktelefon über einen als Gateway/ISP bezeichneten WLAN-Router sowie über einen WWW-Server mit Internetschnittstelle für die Datenübertragung per Interne zu einem Gerätedatenspeicher mit einem "Diagnosesystem" als Datenverarbeitungseinrichtung verbunden, die ihrerseits über einen Feldbus beziehungsweise über ein HART-System, das heißt drahtgebunden, mit den betreffenden Feldgeräten verbunden ist.

Der Erfindung liegt die Aufgabe zugrunde, ein System anzugeben, welches eine vereinfachte Anbindung von Datenverarbeitungseinrichtungen gestattet.

Diese Aufgabe wird erfindungsgemäß durch ein System mit den im Anspruch 1 genannten Merkmalen gelöst.

Demgemäß besitzt das erfindungsgemäße System mindestens eine leitungslose Übertragungsstrecke, mittels der eine Datenübertragung von einem Feldgerät zu einer Datenverarbeitungseinrichtung, sowie in umgekehrte Richtung, durchführbar ist, sowie mindestens einen Datensammler zur Erfassung von Daten des Feldgeräts, beziehungsweise der Feldgeräte, und zum Datenaustausch mit der Datenverarbeitungseinrichtung.

Der Datensammler ist dabei als standardisierte Datenverarbeitungseinrichtung, insbesondere als Personal Computer (PC), ausgeführt und mit den Feldgeräten und mit der Übertragungsstrecke verbunden, das heißt, die leitungslose Übertragungsstrecke befindet sich zwischen dem Datensammler und der Datenverarbeitungseinrichtung.

Die Datenverarbeitungseinrichtung, beispielsweise ein Notebook, ist somit an einem beliebigen Ort innerhalb, und je nach Reichweite der Übertragungsstrecke auch außerhalb, der Schaltanlage anordenbar. Auch eine Bewegung der Datenverarbeitungseinrichtung, beispielsweise von einem Schaltschrank zu einem anderen, ist ohne Verbindungsunterbrechung der Übertragungsstrecke möglich.

Durch Einsatz eines Datensammlers wird der Verdrahtungsaufwand reduziert, da nicht jedes Feldgerät mit der Übertragungsstrecke verbunden werden muss.

Eine günstige Ausgestaltung des erfindungsgemäßen Systems sieht vor, dass die leitungslose Übertragungsstrecke als Funkverbindung ausgeführt ist. Ebenso ist die Übertragungsstrecke auch als optische Verbindung, insbesondere als Infrarotverbindung, ausfahrbar.

In einer vorteilhaften Ausgestaltung ist die Funkverbindung als WLAN-Verbindung nach IEEE 802.11 ausgeführt. Eine solche Verbindung gestattet es, gleichzeitig mehrere Datenverarbeitungseinrichtungen unabhängig voneinander in einer Schaltanlage einzusetzen.

In einer alternativen Ausgestaltungsform ist die Funkverbindung als Bluetooth(TM)Verbindung nach IEEE 802.15 ausgeführt. Eine solche Verbindung gestattet es ebenfalls, gleichzeitig mehrere Datenverarbeitungseinrichtungen unabhängig voneinander in einer Schaltanlage einzusetzen.

In einer weiteren vorteilhaften Ausgestaltung verfügt das System über mindestens einen Datensammler zur Erfassung von Daten des Feldgeräts, beziehungsweise der Feldgeräte, und zum Datenaustausch mit der Datenverbindungseinrichtung. Der Datensammler ist dabei mit den Feldgeräten und mit der Übertragungsstrecke verbunden, das heißt, die Übertragungsstrecke befindet sich zwischen dem Datensammler und der Datenverarbeitungseinrichtung. Durch Einsatz eines Datensammlers wird der Verdrahtungsaufwand reduziert, da nicht jedes Feldgerät mit der Übertragungsstrecke verbunden werden muss.

In einer Weiterbildung der Erfindung sind ein oder mehrere Datensammler über einen Verteiler mit der Übertragungsstrecke verbunden. Dabei befindet sich der Verteiler zwischen den Datensammlern und der Übertragungsstrecke. Durch Einsatz eines Verteilers verringert sich der Verdrahtungsaufwand, da nicht jeder Datensammler eine separate Verbindung zu der Übertragungsstrecke benötigt.

Vorteilhaft ist, dass die Verbindung des Verteilers mit den Datensammlern und mit der Übertragungsstrecke als Netzwerk, insbesondere vom Typ Ethernet, ausgeführt ist.

In einer besonders vorteilhaften Ausgestaltung weist der Datensammler eine Konvertiereinheit zur Umsetzung der von dem Feldgerät erfassten Daten in ein Dokument oder mehrere Dokumente mit einem Standardformat und zur Übertragung von solchen Dokumenten zu der Datenverarbeitungseinrichtung auf. Ein solches Standardformat ist beispielsweise HTML (Hypertext Markup Language). Die Datenverarbeitungseinrichtung benötigt somit lediglich einen Standardbrowser zur Darstellung der von der Konvertiereinheit übertragenen Dokumente. Eine Anpassung der Datenverarbeitungseinrichtung an die jeweiligen Feldgeräte, beispielsweise durch Erstellung und Laden spezieller Applikationen zur Kommunikation mit den Feldgeräten oder zur Visualisierung der von den Feldgeräten übermittelten Daten, ist somit nicht nötig.

In einer weiteren vorteilhaften Ausgestaltung sind mittels der Konvertiereinheit auch Schaltbefehle und/oder Parametrieranweisungen von der Datenverarbeitungseinrichtung an das Feldgerät übertragbar. Somit sind Visualisierung, Bedienung und Parametrierung der Schaltanlage, beziehungsweise einzelner Feldgeräte, mittels der Datenverarbeitungseinrichtung möglich.

Vorteilhaft ist, dass die Konvertiereinheit als Webserver ausgeführt ist. Ein solcher Webserver ist ein Standardmodul, das vergleichsweise einfach zu installieren und zu konfigurieren ist, und das eine Kommunikation mit Standardbrowsern gestattet.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

Es zeigen:
Fig. 1 ein Blockschaltbild eines beispielhaften Systems zur Datenübertragung,
Fig. 2 ein beispielhaftes System zur Datenübertragung in einer Schaltanlage und
Fig. 3 den Aufbau eines beispielhaften Datensammlers.

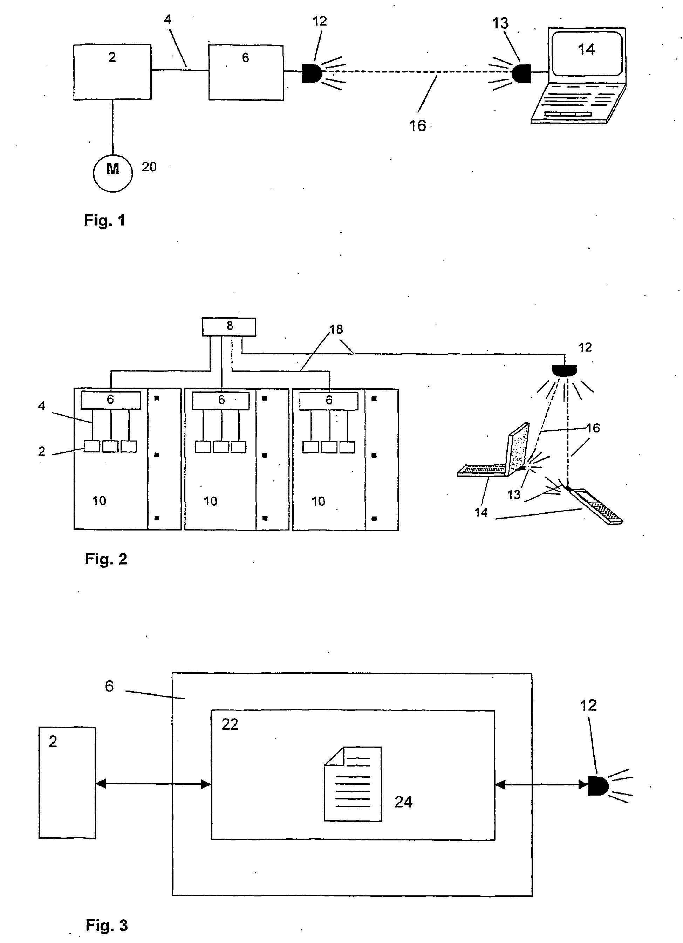

In Fig. 1 ist ein Blockschaltbild eines beispielhaften Systems zur Datenübertragung dargestellt. Ein Feldgerät 2 steuert und überwacht ein Betriebsmittel 20, beispielsweise einen Motor oder einen Leistungsschalter. Das Feldgerät 2 ist über einen Feldbus 4 vom Typ Profibus mit einem Datensammler 6 verbunden. Alternativ ist der Feldbus 4 auch als Modbus, LON (Local Operating Network), CAN (Controller Area Network) oder als anderer Feldbustyp ausführbar. Das Feldgerät 2 übermittelt Daten, wie Stellungs-meldungen und/oder Alarme und/oder Messwerte, des Betriebsmittels 20 an den Datensammler 6.

An den Datensammler 6 ist eine erste Funkschnittstelle 12 angeschlossen, die als WLAN-Adapter (Wireless Local Area Network) gemäß der Norm IEEE 802.11 ausgeführt ist. Ein solcher WLAN-Adapter, der eine Datenübertragung mittels Funk gestattet, wird auch als "Access-Point" bezeichnet.

Eine Datenverarbeitungseinrichtung 14 in Form eines Notebooks, zu welchem Daten des Feldgeräts 2 zu übertragen sind, verfügt über eine zweite Funkschnittstelle 13, welche ebenfalls als WLAN-Adapter ausgeführt ist. Die Datenverarbeitungseinrichtung 14 kann auch ein Personal Computer (PC), insbesondere ein Notebook, oder ein Personal Digital Assistant (PDA), beispielsweise ein Pocket PC, sein. Auch ein Mobiltelefon mit entsprechender Ausstattung oder ein sonstiger Digitalrechner ist erfindungsgemäß ohne weiteres einsetzbar.

Zwischen der ersten Funkschnittstelle 12 und der zweiten Funkschnittstelle 13 befindet sich eine drahtlose Übertragungsstrecke 16, über welche eine Datenübertragung mittels Funk zwischen dem Datensammler 6 und der Datenverarbeitungseinrichtung 14 möglich ist.

Somit ist eine Datenübertragung von dem Feldgerät 2 zu der Datenverarbeitungseinrichtung 14, sowie in umgekehrter Richtung von der Datenverarbeitungseinrichtung 14 zu dem Feldgerät 2, insbesondere zur Übertragung von Schaltbefehlen und/oder Parametrieranweisungen, durchführbar.

In Fig. 2 ist ein beispielhaftes System zur Datenübertragung in einer Schaltanlage dargestellt. Die Schaltanlage weist mehrere Schaltschränke 10 auf, in denen Datensammler 6 und Feldgeräte 2 angeordnet sind. In der gezeigten Anordnung verfügt jeder Schaltschrank 10 über einen Datensammler 6. Es ist jedoch auch möglich, dass ein Schaltschrank 10 mehrere Datensammler 6 aufweist, oder dass mehrere Schaltschränke 10 einen gemeinsamen Datensammler 6 besitzen.

Die Feldgeräte 2 sind über einen Feldbus 4 mit einem Datensammler 6 verbunden. In der gezeigten Darstellung ist jedes Feldgerät 2 mittels einer separaten Datenleitung, welche Teil des Feldbusses 4 ist, mit einem Datensammler 6 verbunden. Der Datensammler 6 verfügt über mehrere Schnittstellen zum Anschluss je eines Feldgeräts 2. Alternativ ist auch eine busförmige, ringförmige oder sternförmige Verbindung von Feldgeräten 2 und Datensammler 6 ausführbar, so dass mehrere Feldgeräte 2 an eine gemeinsame Schnittstelle des Datensammlers 6 anschließbar sind.

Die Datensammler 6 und die erste Funkschnittstelle 12 sind mittels eines Netzwerks 18, beispielsweise vom Typ Ethernet, über einen Verteiler 8 sternförmig miteinander verbunden. Ein solcher Verteiler 8 wird, je nach Ausführung, auch als "Hub", beziehungsweise als "Switching Hub" oder "Switch" bezeichnet.

Mehrere Datenverarbeitungseinrichtungen 14, von denen in diesem Beispiel eine ein Notebook und die andere ein PDA ist, und welche jeweils eine zweite Funkschnittstelle 13 aufweisen, sind über die jeweilige zweite Funkschnittstelle 13 und eine jeweilige drahtlose Übertragungsstrecke 16 mit der ersten Funkschnittstelle 12 verbunden. Als Kommunikationsprotokoll zur Datenübertragung über das Netzwerk 18 und über die Übertragungsstrecke 16 kann TCP/IP verwendet werden.

Ist in einer Schaltanlage bereits ein drahtgebundenes Netzwerk 18, insbesondere vom Typ Ethernet, vorhanden, welches eine Anschlussmöglichkeit für eine Datenverarbeitungseinrichtung aufweist, so ist ein erfindungsgemäßes System mit verhältnismäßig geringen Aufwand installierbar. Durch Anschluss einer ersten Funkschnittstelle 12 an diese Anschlussmöglichkeit entsteht ein erfindungsgemäßes System zur Datenübertragung, welches das vorhandene Netzwerk nutzt.

In Fig. 3 ist beispielhaft der Aufbau eines Datensammlers 6 gezeigt. Der Datensammler 6 kann als standardisierte digitale Datenverarbeitungseinrichtung, insbesondere als Personal Computer (PC), ausgeführt sein. Der Datensammler 6 verfügt unter anderem über einen Prozessor, Datenspeicher und Arbeitsspeicher. Alternativ ist auch eine Ausführung als spezielle elektronische Schaltung denkbar.

Der Datensammler 6 verfügt über eine Konvertiereinheit 22, welche Daten, die von einem Feldgerät 2 übertragen werden, in ein oder mehrere Dokumente 24 mit einem Standardformat umsetzt. Ein solches Standardformat ist HTML (Hypertext Markup Language), ASP (Active Server Page) oder ein ähnliches Format.

Die Konvertiereinheit 22 ist hier als handelsüblicher Webserver ausgeführt, welcher auf dem Datensammler 6 installiert ist.

Über die erste Funkschnittstelle 12, mit welcher der Datensammler 6 direkt oder mittels eines Netzwerks 18 und eines Verteilers 8 verbunden ist, und die Übertragungstrecke 16 ist ein Datenaustausch mit einer oder mehreren Datenverarbeitungseinrichtungen 14 durchführbar.

Die Konvertiereinheit 22 erzeugt beispielsweise für jedes angeschlossene Feldgerät 2 ein separates Dokument 24, welches ein Schaltbild des mit dem Feldgerät 2 verbundenen Betriebsmittels 20 und die von dem Feldgerät 2 übertragenen Daten, enthält. Stellt eine Datenverarbeitungseinrichtung 14 eine Anfrage zur Übermittlung eines so erzeugten Dokuments 24, so wird das betreffende Dokument zu der anfragenden Datenverarbeitungseinrichtung 14 übertragen.

Das zu der Datenverarbeitungseinrichtung 14 übertragene Dokument 24 enthält auch Eingabemöglichkeiten wie Schaltflächen und/oder Textfelder, mittels welcher von der Datenverarbeitungseinrichtung 14 Schaltbefehle und/oder Konfigurationsparameter zu der Konvertiereinheit 22 übertragbar sind. Die Konvertiereinheit 22 überträgt von der Datenverarbeitungseinrichtung 14 erhaltene Schaltbefehle und/oder Konfigurationsparameter zu dem betreffenden Feldgerät 2.

### Bezugszeichenliste

- 2:: Feldgerät
- 4:: Feldbus
- 6:: Datensammler
- 8:: Verteiler
- 10:: Schaltschrank
- 12:: erste Funkschnittstelle
- 13:: zweite Funkschnittstelle
- 14:: Datenverarbeitungseinrichtung
- 16:: Übertragungsstrecke
- 18:: Netzwerk
- 20:: Betriebsmittel
- 22:: Konvertiereinheit
- 24:: Dokument

## Patentansprüche

1. System zur Übertragung von Daten in Schaltanlagen von mindestens einem Feldgerät (2) zu mindestens einer Datenverarbeitungseinrichtung (14), wobei zur Datenübertragung mindestens eine leitungslose Übertragungsstrecke (16) vorgesehen ist, wobei sich die leitungslose Übertragungsstrecke (16) zwischen mindestens einem Datensammler (6) und der Datenverarbeitungseinrichtung (14) befindet und als Funkverbindung ausgeführt ist,
**dadurch gekennzeichnet.**
- **dass** der mindestens eine Datensammler (6) als standardisierte Datenverarbeitungseinrichtung, insbesondere als Personal Computer (PC), ausgeführt ist,
- **dass** er zur Erfassung von Daten des mindestens einen Feldgeräts (2) und zum Datenaustausch mit der Datenverarbeitungseinrichtung (14) ausgestaltet ist,
- **dass** er über mehrere Schnittstellen zum Anschluss je eines Feldgerätes verfügt und
- **dass** er mit einer Konvertiereinheit (22) zusammenarbeitet, welche als handelsüblicher Webserver ausgeführt und auf dem Datensammler (6) installiert ist.

2. System nach Anspruch 1, **dadurch gekennzeichnet, dass** die Funkverbindung als WLAN-Verbindung nach IEEE 802.11 ausgeführt ist.

3. System nach Anspruch 1, **dadurch gekennzeichnet, dass** die Funkverbindung als Bluetooth-Verbindung nach IEEE 802.15 ausgeführt ist.

4. System nach einem der vorstehenden Ansprüche, **dadurch gekennzeichnet, dass** der mindestens eine Datensammler (6) über einen Verteiler (8) mit der Übertragungsstrecke (16) verbunden ist, und dass der Verteiler (8) zwischen dem mindestens einen Datensammler (6) und der Übertragungsstrecke (16) angeordnet ist.

5. System nach Anspruch 4, **dadurch gekennzeichnet, dass** die Verbindung des Verteilers (8) mit dem Datensammler (6) und mit der Übertragungsstrecke (16) als Netzwerk (18), insbesondere vom Typ Ethernet, ausgestaltet ist.

6. System nach einem der vorstehenden Anspruche, **dadurch gekennzeichnet, dass** der Datensammler (6) eine Konvertiereinheit (22) aufweist, welche zur Umsetzung der von dem mindestens einen Feldgerät (2) erfassten Daten in mindestens ein Dokument (24), das ein Standardformat besitzt, und zur Übertragung von Dokumenten (24) zu der Datenverarbeitungseinrichtung (14) eingerichtet ist.

7. System nach Anspruch 6, **dadurch gekennzeichnet, dass** mittels der Konvertiereinheit (22) Schaltbefehle und/oder Parametrieranweisungen von der Datenverarbeitungseinrichtung (14) an das Feldgerät (2) übertragbar sind.

8. System nach einem der Ansprüche 6 oder 7, **dadurch gekennzeichnet, dass** die Konvertiereinheit (22) als Webserver ausgeführt ist.

## Claims

1. System for transmission of data in switchgear assemblies from at least one field device (2) to at least one data processing device (14), wherein at least one wire-free transmission path (16) is provided for data transmission, wherein the wire-free transmission path (16) is located between at least one data collector (6) and the data processing device (14), and is in the form of a radio link,
**characterized**
- **in that** the at least one data collector (6) is in the form of a standardized data processing device, in particular a personal computer (PC),
- **in that** it is designed to acquire data from the at least one field device (2) and to interchange data with the data processing device (14),
- **in that** it has a plurality of interfaces for connecting a respective field device, and
- **in that** it cooperates with a conversion unit (22) which is in the form of a commercially available web server and is installed on the data collector (6).

2. System according to Claim 1, **characterized in that** the radio link is in the form of a WLAN link in accordance with IEE 802.11.

3. System according to Claim 1, **characterized in that** the radio link is in the form of a Bluetooth link in accordance with IEEE 802.15.

4. System according to one of the preceding claims, **characterized in that** the at least one data collector (6) is connected to the transmission path (16) via a distribution panel (8), and **in that** the distribution panel (8) is arranged between the at least one data collector (6) and the transmission path (16).

5. System according to Claim 4, **characterized in that** the link between the distribution panel (8) and the data collector (6), and the transmission path (16), is in the form of a network (18), in particular of the Ethernet type.

6. System according to one of the preceding claims, **characterized in that** the data collector (6) has a conversion unit (22) which is designed to convert the data acquired by the at least one field device (2) to at least one document (24), which has a standard format, and to transmit documents (24) to the data processing device (14).

7. System according to Claim 6, **characterized in that** switching commands and/or configuration instructions can be transmitted from the data processing device (14) to the field device (2) by means of the conversion unit (22).

8. System according to either of Claims 6 and 7 **characterized in that**
the conversion unit (22) is in the form of a web server.

## Revendications

1. Système pour transférer des données dans des installations de commutation entre au moins un appareil de terrain (2) et au moins un dispositif (14) de traitement de données,
au moins une voie sans fil de transfert (16) étant prévue pour le transfert des données,
la voie sans fil de transfert (16) étant située entre au moins un collecteur de données (6) et le dispositif (14) de traitement de données et étant réalisée sous la forme d'une liaison radio,
**caractérisé en ce que**
le ou les collecteurs de données (6) sont réalisés sous la forme de dispositifs standardisés de traitement de données, en particulier sous la forme d'ordinateurs personnels (PC),
**en ce que** le collecteur de données est configuré pour saisir les données du ou des appareils de terrain (2) et pour échanger les données avec le dispositif (14) de traitement de données,
**en ce qu'**il dispose de plusieurs interfaces permettant chacune de raccorder un appareil de terrain et
**en ce qu'**il coopère avec une unité de conversion (22) configurée comme serveur web habituel du marché installé sur le collecteur de données (6).

2. Système selon la revendication 1, **caractérisé en ce que** la liaison radio est configurée sous la forme d'une liaison WLAN selon la norme IEEE 802.11.

3. Système selon la revendication 1, **caractérisé en ce que** la liaison radio est configurée sous la forme d'une liaison Bluetooth selon la norme IEEE 802.15.

4. Système selon l'une des revendications précédentes, **caractérisé en ce que** le ou les collecteurs de données (6) sont reliés à la voie de transfert (16) par un répartiteur (8) et **en ce que** le répartiteur (8) est disposé entre le ou les collecteurs de données (6) et la voie de transfert (16).

5. Système selon la revendication 4, **caractérisé en ce que** la liaison du répartiteur (8) avec le collecteur de données (6) et avec la voie de transfert (16) est configurée comme réseau (18), en particulier du type Ethernet.

6. Système selon l'une des revendications précédentes, **caractérisé en ce que** le collecteur de données (6) présente une unité de conversion (22) qui est conçue pour convertir les données saisies par le ou les appareils de terrain (2) en au moins un document (24) dont le format est standardisé et pour transférer les documents (24) au dispositif (14) de traitement de données.

7. Système selon la revendication 6, **caractérisé en ce que** l'unité de conversion (22) permet de transmettre des ordres de commutation et/ou des indications de paramétrage entre le dispositif (14) de traitement de données et l'appareil de terrain (2).

8. Système selon l'une des revendications 6 ou 7, **caractérisé en ce que** l'unité de conversion (22) est configurée sous la forme d'un serveur web.
